# EUROPÄISCHE PATENTSCHRIFT

(11) **EP 1 904 731 B1**
(45) Veröffentlichungstag und Bekanntmachung des Hinweises auf die Patenterteilung: **01.03.2017**
(21) Anmeldenummer: 06777567.6
(22) Anmeldetag: 04.07.2006
(51) Int. Cl.: F02C 6/18, F02C 7/36, F01K 23/16

(54) **GAS- UND DAMPFTURBINENANLAGE SOWIE VERFAHREN ZU DEREN BETRIEB**
COMBINED GAS AND STEAM TURBINE INSTALLATION AND METHOD OF OPERATING SAME
INSTALLATION COMBINÉE DE TURBINES À GAZ ET À VAPEUR ET SON PROCÉDÉ DE FONCTIONNEMENT

(30) Priorität: 15.07.2005 EP 05015455
(43) Veröffentlichungstag der Anmeldung: 02.04.2008
(73) Patentinhaber: Siemens Aktiengesellschaft, 80333 München (DE)
(72) Erfinder: WEINBERGER, Martin, 90763 Fürth (DE); EMBERGER, Holger-Max, 9470 Buchs (DE); SCHÜTZ, Herbert, 91080 Uttenreuth (DE)
(86) Internationale Anmeldenummer: PCT/EP2006/063874
(87) Internationale Veröffentlichungsnummer: WO 2007/009874

(56) Entgegenhaltungen:
- EP-A- 0 407 132
- EP-A- 1 264 966
- DE-A1- 4 426 354
- PATENT ABSTRACTS OF JAPAN Bd. 2003, Nr. 12, 5. Dezember 2003 (2003-12-05) & JP 2004 137912 A (MITSUBISHI HEAVY IND LTD), 13. Mai 2004 (2004-05-13)

## Beschreibung

Die Erfindung betrifft eine Gas- und Dampfturbinenanlage mit einem Generator, einer Gasturbine und einer Dampfturbine. Sie betrifft weiterhin ein Verfahren zum Betreiben einer derartigen Anlage.

Bei einer Gas- und Dampfturbinenanlage werden die aus einer Gasturbine abströmende heißen Abgase zur Beheizung eines so genannten Abhitzedampferzeugers genutzt, der durch Verdampfung von flüssigem Wasser den zum Betrieb einer Dampfturbine notwendigen Dampf erzeugt. Die Gasturbine und die Dampfturbine dienen dabei in der Regel zum Antrieb eines oder mehrerer elektrischer Generatoren zur Erzeugung elektrischer Energie. Durch die Ausnutzung der im Abgasstrom der Gasturbine, enthaltenen Restwärme lässt sich bei einer derart kombinierten Gas- und Dampfturbinenanlage ein besonders hoher Gesamtwirkungsgrad erzielen und somit Brennstoff einsparen, was nicht nur unter rein wirtschaftlichen Gesichtspunkten, sondern auch im Hinblick auf Belange des Umweltschutzes und der Schonung natürlicher Ressourcen eine immer größere Rolle spielt.

Neben der Erzeugung elektrischer Energie kann bei einem in Kraft-Warme-Kopplung (KWK) betriebenen Gas- und Dampfkraftwerk (GuD-Kraftwerk) auch die Bereitstellung von Dampf als Heizdampf für Fernwärmeanwendungen oder als Prozessdampf in der chemischen oder sonstigen Industrie ein Auslegungsziel sein. Dazu wird dem GuD-Prozess ein Teil des Dampfes entzogen, so dass der in ihm gespeicherte.Energieinhalt nicht mehr für den Betrieb der Dampfturbine bzw. zur Stromerzeugung zur Verfügung steht. Bei Heizkraftwerken unterscheidet man zwischen strom- und wärmegeführten KWK-Anlagen je nach der Priorität, die jeder der beiden Energieformen zugemessen wird: Stromgeführte Anlagen optimieren den Stromertrag, wärmege führte Anlagen den Wärmeertrag, jeweils zu Lasten der anderen Energieform.

Eine Dampfturbine kann entweder im Gegendruckbetrieb oder im Kondensationsbetrieb betrieben werden. Im Kondensationsbetrieb ist der Expansionsstrecke der Dampfturbine ein Kondensator nachgeschaltet, in dem infolge der Abkühlung und Kondensation des einströmenden Niederdruckdampfes mittels Kühlwasser ein Unterdruck herrscht. Der Dampf wird nach verrichteter Expansionsarbeit ausgangsseitig gewissermaßen aus der Dampfturbine herausgesaugt. Bei dieser Betriebsweise wird die Enthalpiedifferenz des Dampfes zwischen dem Ein- und dem Abströmbereich der Dampfturbine möglichst konsequent zur Erzeugung einer Rotationsbewegung des auch als Rotor bezeichneten Turbinenläufers und damit schließlich zur Gewinnung elektrischer Energie genutzt. Bei Gegendruckbetrieb hingegen wird durch die Turbine nicht das gesamte mögliche Enthalpiegefälle abgebaut. Vielmehr wird ausgangsseitig ein Druck- und Temperaturniveau gehalten, welches dem für eine Verwendung des abströmenden Dampfes in einer nachgeschalteten technischen Anlage gewünschten Heiz- oder Prozessdampfniveau entspricht.

Bei einer bislang üblichen Konfiguration einer GuD-Anlage, die sich zumindest prinzipiell sowohl für einen Kondensationsbetrieb der Dampfturbine als auch für einen Gegendruckbetrieb eignet, und die somit eine flexibel an den momentan vorliegenden Bedarf an Heiz- oder Prozessdampf und an elektrischer Energie angepasste Betriebsweise ermöglicht, sind auf einer ersten Welle eine Gasturbine und ein erster Generator angeordnet. Auf einer von der ersten Welle unabhängigen zweiten Welle sind bei dieser so genannten "Cross-Compound"-Bauweise üblicherweise eine Hochdruckstufe und gegebenenfalls eine Mitteldruckstufe, welche einen mit der zweiten Welle verbundenen zweiten Generator antreiben, als Bestandteile einer Dampfturbinenanlage angeordnet. Schließlich ist noch eine von der ersten und der zweiten Welle unabhängige dritte Welle vorgesehen, an die eine Niederdruckteilturbine und ein dritte.r Generator angekoppelt sind. Vermöge eines der Hoch- oder Mitteldruckstufe ausgangsseitig nachgeschalteten Stellventils kann der von der Hoch- oder Mitteldruckstufe abströmende und immer noch unter vergleichsweise hohem Druck stehende Dampf in einer ersten Betriebsvariante direkt - d. h. unter Umgehung der auf dem dritten Wellenstrang angeordneten und in diesem Fall stillgelegten Niederdruckstufe - einer technischen Anlage als Heiz- oder Prozessdampf zugeführt werden (Gegendruckbetrieb). Es ist aber auch möglich, in einer zweiten Betriebsvariante den von der Hochdruckteilturbine abströmenden Dampf der Niederdruckteilturbine zuzuführen, in welcher er sich schließlich unter Leistung von zusätzlicher Antriebsarbeit vollständig, mithin auf einen Druck von ungefähr Null bar, entspannt (Kondensationsbetrieb).

Ein Nachteil der oben beschriebenen Konfiguration, die auch als Mehrwellenanordnung bekannt ist, besteht darin, dass die Hoch- und die Niederdruckstufe jeweils einen eigenen Generator benötigen, was mit hohen Anschaffungs- und gegebenenfalls auch Ünterhaltungs- bzw. Wartungskosten verbunden ist. Soll im Falle des Kondensationsbetriebes mit zugeschaltetem Niederdruckstrang die von den Generatoren erzeugte Energie in ein gemeinsames Netz eingespeist werden, so sind zudem hinsichtlich der Netzfrequenz zusätzliche Angleichungs- oder Umformungsmaßnahmen erforderlich. Schließlich erfordert eine Gas- und Dampfturbinenanlage in Mehrwellenanordnung einen vergleichsweise hohen Platzbedarf.

Das Dokument EP 1 264 966 A1 offenbart eine Dampfturbine mit einem Hochdruck- und einem Mitteldruckbereich.

Die DE 44 26 354 A1 offenbart eine Anlage mit einer Dampfturbine, einem Generator und einer Gasturbine, wobei zwischen der Dampfturbine und dem Generator eine Kupplung angeordnet ist.

Der Erfindung liegt daher die Aufgabe zugrunde, eine Gas- und Dampfturbinenanlage der eingangs genannten Art anzugeben, die bei einfach gehaltener Bauweise und bei hohem Gesamtwirkungsgrad verschiedene Betriebsarten mit variierender Dampfauskopplung zulässt. Es soll außerdem ein zum Betrieb einer derartigen Gas- und Dampfturbinenanlage geeignetes Verfahren angegeben werden.

Bezüglich der Gas- und Dampfturbinenanlage wird die Aufgabe gelöst, indem der Generator, die Gasturbine und die Dampfturbine auf einer eine Anzahl von Wellensegmenten aufweisenden Welle angeordnet sind, wobei die Dampfturbine eine jeweils einem Wellensegment zugeordnete Hochdruckstufe und eine Niederdruckstufe umfasst, wobei das der Niederdruckstufe zugeordnete Wellensegment endseitig an der Welle angeordnet ist, und wobei zwischen dem Wellensegment der Hochdruckstufe und dem Wellensegment der Niederdruckstufe mindestens eine Kupplung vorgesehen ist, wobei die öder jede Kupplung eine Schaltkupplung ist, die während des Betriebs der Gas- und Dampfturbinenanlage schaltbar ist.

Die Gas- und Dampfturbinenanlage braucht dann zur An- oder Abkopplung einzelner Druckstufen nicht erst herunter- und anschließend wieder hochgefahren zu werden. Damit ist eine besonders schnelle und wirtschaftliche Anpassung an variierende Bedarfsvorgaben ermöglicht.

Die Erfindung geht dabei von der Überlegung aus, dass eine Einwellenanordnung für eine in Kraft-Wärme-Kopplung betriebene Gas- und Dampfturbinenanlage vorteilhaft ist, da auf diese Weise die oben geschilderten Nachteile einer Mehrwellenanordnung vermieden sind. Insbesondere wird nur ein einziger Generator benötigt. Dabei sollte die Dampfturbine der GuD-Anlage mehrstufig aufgebaut sein, um auf konstruktiv einfache und betriebstechnisch sichere Weise Entnahmestellen für Heiz- oder Prozessdampf mit definierten Dampfparametern zwischen den Druckstufen der Dampfturbine bereitzustellen. Es sollten also mindestens eine Hochdruckstufe und eine Niederdruckstufe vorgesehen sein, für die jeweils ein herkömmliches und bewährtes Design zum Einsatz kommen kann. Auf diese Weise ist eine vergleichsweise aufwendige Gestaltung einer Dampfturbine als Entnahmeturbine nicht erforderlich. Eine regelbare Entnahmevorrichtung für Heiz- oder Prozessdampf ist bei dem nunmehr vorgesehenen System vielmehr innerhalb einer die Hochdruckstufe und die Niederdruckstufe dampfseitig verbindenden Überströmleitung angeordnet. Dabei kann der Dampf zwischen diesen beiden Druckstufen gegebenenfalls auch noch einer Mitteldruckstufe und/oder einer Zwischenüberhitzung zugeführt werden. Wenn allerdings die der Hochdruckstufe und der Niederdruckstufe zugeordneten Wellensegmente starr miteinander verbunden sind, so muss die Niederdruckstufe immer mit der gleichen Drehzahl wie die Hochdruckstufe laufen. Aus Gründen der Betriebssicherheit muss dann auch bei einem Entnahmebetrieb der Dampfturbinenanordnung ein Teilstrom des Dampfmassenstroms zur Kühlung der Niederdruckstufe durch diese hindurchgeführt werden. Der zur Kühlung notwendige Dampf geht somit für die angestrebte Heizleistung oder sonstige Einsatzzwecke mit Prozessdampfbedarf verloren. Um dennoch bei der nunmehr vorgesehen Einwellenanordnung bei Entnahme- bzw. Gegendruckbetrieb die maximal mögliche Menge an Dampfentnahme nach der Hochdruckstufe erreichen zu können und somit beispielsweise eine nachgeschaltete Fernwärmeanwendung mit einer besonders hohen Heizleistung zu versorgen, ist zwischen dem Wellensegment der Hochdruckstufe und dem Wellensegment der Niederdruckstufe eine Kupplung vorgesehen. Die Niederdruckstufe kann damit bei Bedarf mechanisch vom restlichen Wellenstrang abgekoppelt und stillgesetzt werden. Da in diesem Fall kein Kühldampf in der Niederdruckstufe vorhanden sein muss, ist auch dampfseitig eine vollständige Abtrennung der Niederdruckstufe von der restlichen Turbinenanordnung möglich. Damit entfallen auch Reibungsverluste, wie sie bei einer starr angekoppelten und zwangsweise mitrotierenden Niederdruckstufe unvermeidlich wären. Andererseits kann die Niederdruckstufe mittels der Kupplung auch bedarfsgerecht an die den Generator antreibende Welle angekoppelt werden. Gerade bei einem derartigen Kondensationsbetrieb, d. h. mit angekoppelter Niederdruckstufe sowie einem ihr dampfseitig nachgeschalteten Kondensator, kann dann eine besonders hohe elektrische Leistung erzeugt und einem Abnehmer oder Stromverbraucher zur Verfügung gestellt werden.

Der Generator kann endseitig an der Welle der Gas- und Dampfturbinenanlage angeordnet sein, so dass die Gasturbine axial zwischen dem Generator und der Dampfturbine liegt. In einer bevorzugten Variante ist jedoch der Generator axial zwischen der Gasturbine und der Dampfturbine angeordnet.

Vorzugsweise weist die Gas- und Dampfturbinenanlage neben der Hochdruckstufe und der Niederdruckstufe auch noch eine Mitteldruckstufe auf, die strömungsmediumsseitig vorteilhafterweise zwischen die Hochdruckstufe und die Niederdruckstufe geschaltet ist. In einer ersten bevorzugten Variante ist dabei die Mitteldruckstufe über ein gemeinsames Wellensegment mit der Hochdruckstufe verbunden. Durch diese starre Ankopplung rotieren der Rotor der Hochdruckstufe und der Rotor der Mitteldruckstufe also stets mit gleicher Drehzahl. Für die Hochdruckstufe und die Mitteldruckstufe können dabei räumlich getrennte Gehäuse vorgesehen sein. Sie können aber auch vorteilhafterweise in einem gemeinsamen Gehäuse untergebracht sein und auf diese Weise eine kombinierte Hoch-/Mitteldruckturbine bilden.

In einer vorteilhaften Alternativvariante kann die Mitteldruckstufe aber auch über ein gemeinsames Wellensegment mit der Niederdruckstufe verbunden sein und mit dieser hinsichtlich der Rotationsbewegung eine Einheit bilden. In diesem Fall wird vermöge der Kupplung die von der Mitteldruckstufe und der Niederdruckstufe gebildete Einheit von dem mit dem Generator verbundenen Wellensegment der Hochdruckstufe bei Bedarf als Ganzes abgekoppelt. Dann sind während des Entnahmebetriebs der Gas- und Dampfturbinenanlage sowohl die Niederdruckstufe als auch die Mitteldruckstufe stillgelegt und werden nicht von Dampf durchströmt. Analog zur ersten Variante können die Mitteldruckturbine und die Niederdruckturbine durch in getrennten Gehäusen angeordnete Teilturbinen gebildet sein oder auch in einem gemeinsamen Gehäuse untergebracht sein. Sofern getrennte Gehäuse für die Mitteldruckstufe und die Niederdruckstufe vorgesehen sind, ist die Niederdruckstufe vorteilhafterweise in Form einer zweiflutigen Niederdruckteilturbine gebildet.

Sowohl in der ersten Variante, bei der die Mitteldruckstufe mit der Hochdruckstufe eine Einheit bildet, als auch bei der zweiten Variante, bei der die Mitteldruckstufe über ein gemeinsames Wellensegment mit der Niederdruckstufe verbunden ist, ist es im Hinblick auf die Anordnung der dampfseitig zwischen den einzelnen Druckstufen vorgesehenen Überström- und Versorgungsleitungen besonders vorteilhaft, wenn die Mitteldruckstufe axial zwischen der Hochdruckstufe und der Niederdruckstufe angeordnet ist.

In einer vorteilhaften Weiterbildung dieses Konzeptes, bei dem die Mitteldruckstufe axial zwischen der Hochdruckstufe und der Niederdruckstufe angeordnet ist, ist sowohl zwischen dem der Hochdruckstufe zugeordneten Wellensegment und dem der Mitteldruckstufe zugeordneten Wellensegment als auch zwischen den Wellensegmenten der Mitteldruckstufe und der Niederdruckstufe jeweils eine Kupplung vorgesehen. Auf diese Weise lassen sich sukzessive zuerst die endseitig am Wellenstrang angeordnete Niederdruckstufe und anschließend auch noch die Mitteldruckstufe von der den Generator antreibenden Welle abkoppeln. Damit ist eine besonders bedarfsgerechte Dampfentnahme je nach gewünschtem Druck- und Temperaturniveau entweder direkt an der Abströmung der Hochdruckstufe oder an der Abströmung der Mitteldruckstufe ermöglicht, wobei die jeweils nicht mehr benötigten Druckstufen temporär stillgelegt werden können und dabei keinerlei Kühldampf beanspruchen.

In einer besonders bevorzugten Ausbildung der Gas- und Dampfturbinenanlage, die mit allen der bislang beschriebenen Konfigurationen vereinbar ist, ist zwischen dem Wellensegment der Hochdruckstufe und dem Generator oder (je nach Reihenfolge der Anordnung) zwischen dem Wellensegment der Hochdruckstufe und der Gasturbine eine zusätzliche Kupplung vorgesehen. Damit lässt sich bei Bedarf die gesamte Dampfturbinenanordnung vom restlichen Wellenstrang abkoppeln, so dass dann der Generator nur noch von der Gasturbine alleine angetrieben wird. Der von dem der Gasturbine nachgeschalteten Abhitzedampferzeuger erzeugte Dampf kann dann unmittelbar und ohne vorherige Expansion in einer Druckstufe der Dampfturbine einer weiteren Verwendung als Heiz- oder Prozessdampf zugeführt werden.

Hinsichtlich des Betriebsverfahrens wird die oben genannte Aufgabe gelöst, indem abhängig vom Bedarf an Heiz- und Pro-' zessdampf und/oder vom Bedarf an elektrischer Energie eine oder mehrere Druckstufen der Dampfturbine vom Generator abgekoppelt oder an den Generator angekoppelt werden. Insbesondere ist es dabei vorteilhaft, wenn die für einen Kondensationsbetrieb ausgelegte Niederdruckstufe je nach Bedarf vermöge einer Kupplung mit der Antriebswelle verbunden oder von ihr getrennt wird. Vorteilhafterweise ist die Kupplung dazu als Schaltkupplung ausgestaltet.

Vorteilhafterweise wird bei vom Generator abgekoppelter Niederdruckstufe der von der Hochdruckstufe oder von einer Mitteldruckstufe abströmende Abdampf der Dampfturbine entnommen und ohne Durchströmung der Niederdruckstufe direkt einer technischen Anlage als Heiz- oder Prozessdampf zugeführt. Bei an den Generator angekoppelter Niederdruckstufe wird der von der Hochdruckstufe oder der Mitteldruckstufe abströmende Abdampf hingegen vorteilhafterweise der Niederdruckstufe zugeführt. Je nach Auslegung der Druckstufen kann zwischen je zwei dampfseitig aufeinander folgenden Druckstufen eine Zwischenüberhitzung des Dampfes vorgesehen sein.

Die mit der Erfindung erzielen Vorteile bestehen insbesondere darein, dass mittels der zwischen zwei Dampfdruckstufen einer GuD-Anlage in Einwellenkonfiguration angeordneten Kupplung die Dampfturbine sowohl im Kondensationsbetrieb als auch im Gegendruckbetrieb betrieben werden kann, wobei die Nachteile bislang üblicher Mehrwellenanordnungen vermieden sind. Im Kondensationsbetrieb mit geschlossener Kupplung geht der gesamte Dampfmassenstrom durch die Niederdruckteilturbine hindurch, und es wird eine maximale elektrische Leistung erzeugt. Wird ein Teil der Turbine, also entweder die Niederdruckteilturbine alleine oder die Niederdruckstufe gemeinsam mit einer Mitteldruckstufe, abgekoppelt und stillgesetzt, so ist für den abgekuppelten Teil keine Kühldampfversorgung notwendig. Nach der letzten sich im Einsatz befindlichen Druckstufe kann der komplette Dampf dem GuD-Prozess entzogen werden und als Heiz- oder Prozessdampf verwendet werden. Somit ist ohne Umbauarbeiten eine schnelle Umschaltung zwischen einer auf maximale Stromerzeugung und einer auf maximale Dampfauskopplung ausgerichteten Betriebsart der Gas- und Dampfturbinenanlage möglich.

Verschiedene Ausführungsbeispiele der Erfindung werden anhand einer Zeichnung näher erläutert. Darin zeigen:

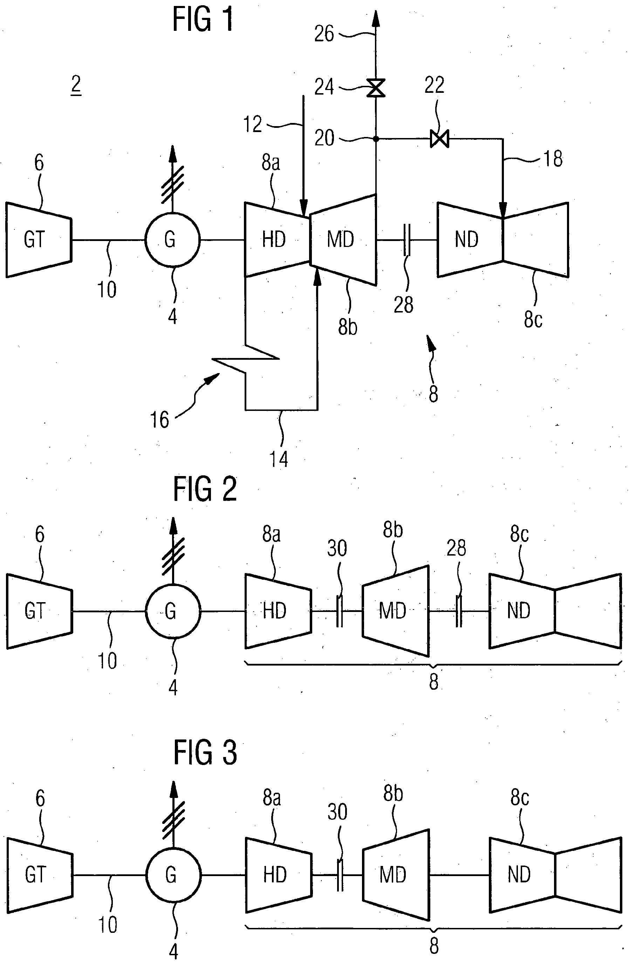

- FIG 1 bis 6: jeweils ein schematisches Blockdiagramm einer ersten bis sechsten Variante einer Gas- und Dampfturbinenanlage gemäß der vorliegenden Erfindung.

Gleiche Teile sind in allen Figuren mit denselben Bezugszeichen versehen.

Die in FIG 1 gezeigte Gas- und Dampfturbinenanlage 2 ist Bestandteil eines GuD-Kraftwerks. Für eine besonders effiziente Nutzung von fossiler Primärenergie ist ein Betrieb der GuD-Anlage in Kraft-Wärme-Kopplung vorgesehen. Zu diesem Zweck weist die Gas- und Dampfturbinenanlage 2 einen elektrischen Generator 4, eine Gasturbine 6 und eine Dampfturbine 8 auf. Die Dampfturbine 8 umfasst dabei eine Hochdruckstufe 8a, eine Mitteldruckstufe 8b und eine Niederdruckstufe 8c. Die jeweils während des Betriebs vorliegenden Druckverhältnisse sind in der FIG 1 auch durch die Beschriftung HD, MD oder ND kenntlich gemacht. Die bei der Verbrennung eines fossilen Brennstoffes in der Gasturbine 6 entstehenden heißen Abgase dienen zur Beheizung eines hier nicht gezeigten Abhitzedampferzeugers, in dem durch Wasserverdampfung Dampf zum Betrieb der Dampfturbine 8 erzeugt wird. Die Gasturbine 6, die Dampfturbine 8 und der Generator 4 sind in so genannter Einwellenanordnung auf einer entlang einer gemeinsamen Achse ausgerichteten Welle 10 hintereinander geschaltet, wobei im vorliegenden Fall der Generator 4 in axialer Richtung zwischen der Gasturbine 6 und der Dampfturbine 8 angeordnet ist. Das von der Gasturbine 6 und der Dampfturbine 8 auf die Welle 10 aufgegebene Drehmoment dient zum Antrieb des Generators 4. Der im Generator 4 erzeugte elektrische Strom wird in ein nicht näher dargestelltes Stromnetz eingespeist.

Die Hochdruckstufe 8a der Dampfturbine 8 wird im Betriebsfall über eine Frischdampfleitung 12 mit Frischdampf versorgt, welcher durch den hier nicht gezeigten, der Gasturbine 6 rauchgasseitig nachgeschalteten Abhitzedampferzeuger bereitgestellt wird. Der Frischdampf durchläuft nach dem Eintritt in die Hochdruckstufe 8a eine Hochdruckexpansionsstrecke, wobei er sich arbeitsleistend entspannt und mittels Impulsübertrag auf die Turbinenschaufeln den Rotor als Teil des der Hochdruckstufe 8a zugeordneten Wellensegments antreibt. Der nach dem Austritt aus der Hochdruckstufe 8a teilweise entspannte Dampf wird über eine Überströmleitung 14 einem hier nur schematisch angedeuteten Zwischenüberhitzer 16 zugeführt, wobei sich bei ungefähr gleichbleibendem Druck seine Temperatur erhöht. Anschließend wird er der Mitteldruckstufe 8b zugeführt, die im vorliegenden Fall mit der Hochdruckstufe 8a auf einem gemeinsamen Wellensegment angeordnet ist und mit ihr eine in einem gemeinsamen Gehäuse untergebrachte kombinierte HD-/MD-Teilturbine mit in Gegenrichtung durchströmten Expansionsabschnitten bildet. Dabei ist der HD-Abschnitt 8a dem Generator 4 und der MD-Abschnitt 8b der Niederdruckstufe 8c zugewandt. Nach dem Abströmen von der Mitteldruckstufe 8b ist der bereits auf ein niedriges Druck- und Temperaturniveau entspannte Dampf über eine weitere Überströmleitung 18 der Niederdruckstufe 8c zuführbar.

Die Überströmleitung 18 weist dabei eine Abzweigung 20 zur Entnahme von Heiz- oder Prozessdampf auf, wobei das Verhältnis der beiden auf diese Weise erzeugten Teilmassenströme durch zwei im jeweiligen Leitungszweig angeordnete Ventile 22, 24 regelbar ist. Der an der Abzweigung 20 je nach Bedarf entnehmbare Heiz- oder Prozessdampf wird über eine Dampfleitung 26 einer hier nicht dargestellten technischen Anlage oder einem Industriebetrieb zugeführt. Falls kein Heiz- oder Prozessdampf benötigt wird, das Ventil 24 somit geschlossen ist, wird der gesamte die Mitteldruckstufe 8b verlassende Dampfmassenstrom bei geöffnetem Ventil 22 der Niederdruckstufe 8c zugeführt. Der Niederdruckstufe 8c ist ausgangseitig ein hier nicht dargestellter Kondensator nachgeschaltet, in welchem sich der austretende Dampf bei einem Druck von annähernd Null bar fast vollständig entspannt und dabei zu flüssigem Wasser kondensiert, welches anschließend erneut in den Wasser-Dampf-Kreislauf der Dampfturbinenanlage eingespeist wird. Beim Kondensationsbetrieb der Dampfturbine 8 wird in der Niederdruckstufe 8c ein zusätzliches Drehmoment auf die Welle 10 aufgeprägt, so dass der gesamte GuD-Prozess für die Erzeugung einer hohen elektrischen Leistung optimiert ist.

Die Gas- und Dampfturbinenanlage 2 bietet aber auch im anderen Fall, nämlich, dass ein möglichst hoher Dampfmassenstrom nach dem Abströmen aus der Mitteldruckstufe 8b für eine Verwendung als Heiz- oder Prozessdampf ausgekoppelt werden soll, einen besonders hohen Wirkungsgrad. Zu diesem Zweck lässt sich das der Niederdruckstufe 8c zugeordnete Wellensegment mittels einer Schaltkupplung 28 von dem der kombinierten HD-/MD-Turbine 8a, 8b zugeordneten Wellensegment und damit auch vom Generator 4 abkoppeln und stilllegen. Da bei stillgelegter Niederdruckstufe 8c kein Teilmassenstrom des Dampfes mehr als Kühldampf durch die Niederdruckstufe 8c hindurchgeleitet werden muss, kann und sollte das Ventil 22 in diesem Fall vollständig geschlossen sein. Damit steht der gesamte aus der Mitteldruckstufe 8b abströmende Dampfmassenstrom für Heizzwecke oder andere Anwendungen zur Verfügung. Zudem sind Reibungsverluste, wie sie bei einer starr mit dem restlichen Wellenstrang verbundenen und zwangsläufig "im Leerlauf" mitrotierenden Niederdruckstufe 8c auftreten würden, komplett eliminiert.

Bei der in FIG 2 dargestellten Variante sind die Hochdruckstufe 8a und die Mitteldruckstufe 8b in getrennten Gehäusen untergebracht, wobei zwischen diesen beiden Druckstufen eine zusätzliche Schaltkupplung 30 vorgesehen ist. Neben der Niederdruckstufe 8c alleine kann hier also hoch zusätzlich die Mitteldruckstufe 8b vom restlichen, auf den Generator 4 einwirkenden Antriebsstrang abgekoppelt und stillgelegt werden, je nachdem, ob eine Entnahme von Prozessdampf auf einem mittleren oder einem niedrigen Druckniveau gewünscht ist. Die dampfseitige Verschaltung der Druckstufen 8a, 8b, 8c, die hier nicht näher dargestellt ist, entspricht dabei im Wesentlichen der aus FIG 1 bekannten Konfiguration, weist aber zwischen der Hochdruckstufe 8a und der Mitteldruckstufe 8b noch weitere Entnahme- oder Abzapfstellen für Prozessdampf sowie entsprechende Ventile zur Steuerung der Teilmassenströme auf.

Bei der Variante in FIG 3 sind die Mitteldruckstufe 8b und die Niederdruckstufe 8c auf einem gemeinsamen Wellensegment angeordnet, können mithin nur gemeinsam von der Hochdruckstufe 8a abgekoppelt und stillgelegt werden. Diese Variante ist vor allem dann vorteilhaft, falls kein externer Bedarf an Niederdruckdampf besteht. Dann kann die aus FIG 1 bekannte Kupplung 26 zwischen der Mitteldruckstufe 8b und der Niederdruckstufe 8c entfallen.

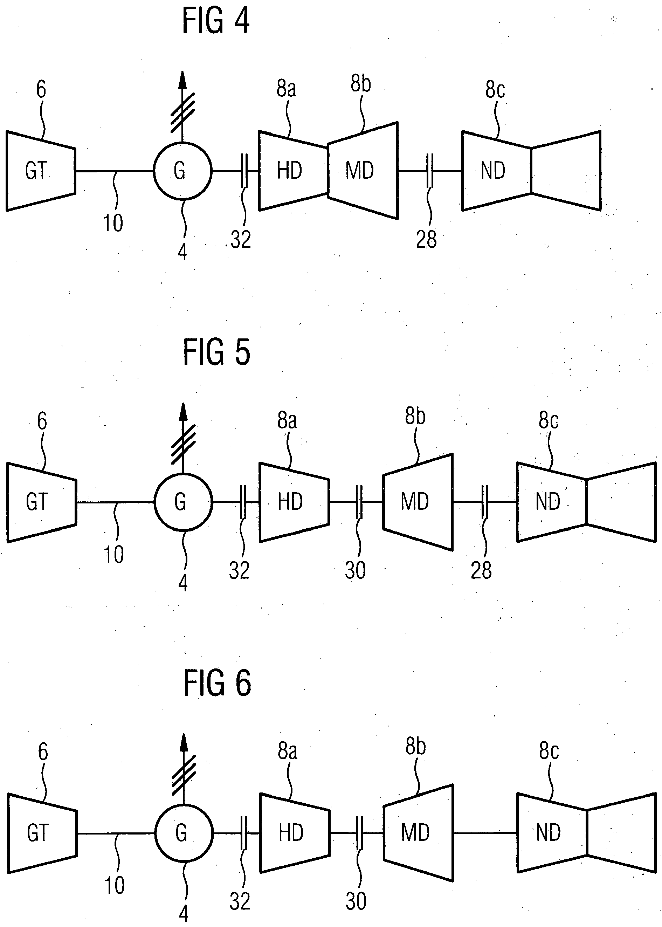

Die jeweils in den FIG 4 bis FIG 6 gezeigten Konfigurationen entsprechen schließlich den bereits aus FIG 1 bis FIG 3 bekannten Konfigurationen, mit dem Unterschied, dass jeweils zwischen der Hochdruckstufe 8a und dem Generator 4 noch eine weitere Schaltkupplung 32 vorgesehen ist. Damit lässt sich bei Bedarf die gesamte Dampfturbine 8 vom Generator 4 abkoppeln, so dass dieser dann nur noch von der Gasturbine 6 angetrieben wird.

## Patentansprüche

1. Gas- und Dampfturbinenanlage (2), bei der auf einer eine Anzahl von Wellensegmenten umfassenden Welle (10) ein Generator (4), eine Gasturbine (6) und eine Dampfturbine (8) angeordnet sind, wobei die Dampfturbine (8) eine jeweils einem Wellensegment zugeordnete Hochdruckstufe (8a) und eine Niederdruckstufe (8c) umfasst, wobei das der Niederdruckstufe (8c) zugeordnete Wellensegment endseitig an der Welle (10) angeordnet ist, und wobei zwischen dem Wellensegment der Hochdruckstufe (8a) und dem Wellensegment der Niederdruckstufe (8c) mindestens eine Kupplung (28, 30) vorgesehen ist, bei der die oder jede Kupplung (28, 30, 32) eine Schaltkupplung ist,
bei der die oder jede Schaltkupplung (28, 30, 32) während des Betriebs schaltbar ist.

2. Gas- und Dampfturbinenanlage (2) nach Anspruch 1, bei der der Generator (4) axial zwischen der Gasturbine (6) und der Dampfturbine (8) angeordnet ist.

3. Gas- und Dampfturbinenanlage (2) nach Anspruch 1 oder 2, bei der die Hochdruckstufe (8a) über ein gemeinsames Wellensegment mit einer Mitteldruckstufe (8b) verbunden ist.

4. Gas- und Dampfturbinenanlage (2) nach Anspruch 3, bei der die Hochdruckstufe (8a) und die Mitteldruckstufe (8b) in einem gemeinsamen Gehäuse untergebracht sind.

5. Gas- und Dampfturbinenanlage (2) nach Anspruch 1 oder 2, bei der die Niederdruckstufe (8c) über ein gemeinsames Wellensegment mit einer Mitteldruckstufe (8b) verbunden ist.

6. Gas- und Dampfturbinenanlage (2) nach Anspruch 5, bei der die Niederdruckstufe (8c) und die Mitteldruckstufe (8b) in einem gemeinsamen Gehäuse untergebracht sind.

7. Gas- und Dampfturbinenanlage (2) nach Anspruch 1 oder 2, bei der zwischen der Hochdruckstufe (8a) und der Niederdruckstufe (8c) eine Mitteldruckstufe (8b) vorgesehen ist, wobei die Mitteldruckstufe (8b) ein Wellensegment umfasst, das über jeweils eine Kupplung (28, 30) mit den beiden benachbarten Wellensegmenten verbindbar ist.

8. Gas- und Dampfturbinenanlage (2) nach einem der Ansprüche 1 bis 7, bei der zwischen dem Wellensegment der Hochdruckstufe (8a) und dem Generator (4) oder zwischen dem Wellensegment der Hochdruckstufe (8a) und der Gasturbine (6) eine Kupplung (32) vorgesehen ist.

9. Verfahren zum Betreiben einer Gas- und Dampfturbinenanlage (2) nach einem der Ansprüche 1 bis 8 in Kraft-Wärme-Kopplung, bei dem abhängig vom Bedarf an Heiz- und Prozessdampf und/oder vom Bedarf an elektrischer Energie eine oder mehrere Druckstufen (8a, 8b, 8c) der Dampfturbine (8) vom Generator (4) abgekoppelt oder an den Generator (4) angekoppelt werden.

10. Verfahren nach Anspruch 9, bei dem die Niederdruckstufe (8c) an- oder abgekoppelt wird.

11. Verfahren nach Anspruch 9 oder 10, bei dem bei vom Generator (4) abgekoppelter Niederdruckstufe (8c) der von der Hochdruckstufe (8a) oder von einer Mitteldruckstufe (8b) abströmende Abdampf der Dampfturbine (8) entnommen wird und ohne Durchströmung der Niederdruckstufe (8c) einer technischen Anlage als Heiz- oder Prozessdampf zugeführt wird.

12. Verfahren nach Anspruch 9 oder 10, bei dem bei an den Generator (4) angekoppelter Niederdruckstufe (8c) der von der Hochdruckstufe (8a) oder von einer Mitteldruckstufe (8b) abströmende Abdampf nach einer Zwischenüberhitzung der Niederdruckstufe (8c) zugeführt wird.

## Claims

1. Combined gas and steam turbine installation (2), in which on a shaft (10) comprising a number of shaft segments there are arranged a generator (4), a gas turbine (6) and a steam turbine (8), the steam turbine (8) having a high-pressure stage (8a) and a low-pressure stage (8c) respectively assigned to one shaft segment, the shaft segment assigned to the low-pressure stage (8c) being arranged on an end side of the shaft (10), and at least one coupling (28, 30) being provided between the shaft segment of the high pressure stage (8a) and the shaft segment of the low-pressure stage (8c), in which the or each coupling (28, 30, 32) is a clutch,
in which the or each clutch (28, 30, 32) can be switched during operation.

2. Combined gas and steam turbine installation (2) according to Claim 1, in which the generator (4) is arranged axially between the gas turbine (6) and the steam turbine (8).

3. Combined gas and steam turbine installation (2) according to Claim 1 or 2, in which the high-pressure stage (8a) is connected to an intermediate-pressure stage (8b) via a common shaft segment.

4. Combined gas and steam turbine installation (2) according to Claim 3, in which the high-pressure stage (8a) and the intermediate-pressure stage (8b) are installed in a common housing.

5. Combined gas and steam turbine installation (2) according to Claim 1 or 2, in which the low-pressure stage (8c) is connected to an intermediate-pressure stage (8b) via a common shaft segment.

6. Combined gas and steam turbine installation (2) according to Claim 5, in which the low-pressure stage (8c) and the intermediate-pressure stage (8b) are installed in a common housing.

7. Combined gas and steam turbine installation (2) according to Claim 1 or 2, in which an intermediate-pressure stage (8b) is provided between the high-pressure stage (8a) and the low-pressure stage (8c), the intermediate-pressure stage (8b) comprising a shaft segment which can be connected to the two adjacent shaft segments by means of a respective coupling (28, 30).

8. Combined gas and steam turbine installation (2) according to one of Claims 1 to 7, in which a coupling (32) is provided between the shaft segment of the high-pressure stage (8a) and the generator (4), or between the shaft segment of the high-pressure stage (8a) and the gas turbine (6).

9. Method for operating a combined gas and steam turbine installation (2) according to one of Claims 1 to 8 in a combined heat and power setup, in which, depending on the demand for heating and process steam, and/or on the demand for electrical energy, one or more pressure stages (8a, 8b, 8c) of the steam turbine (8) are decoupled from the generator (4) or are coupled to the generator (4).

10. Method according to Claim 9, in which the low-pressure stage (8c) is coupled or decoupled.

11. Method according to Claim 9 or 10, in which, when the low-pressure stage (8c) is decoupled from the generator (4), the waste steam flowing out from the high-pressure stage (8a) or from an intermediate-pressure stage (8b) is withdrawn from the steam turbine (8) and is supplied, without flowing through the low-pressure stage (8c), to a technical plant as heating or process steam.

12. Method according to Claim 9 or 10, in which, when the low-pressure stage (8c) is coupled to the generator (4), the waste steam flowing out from the high-pressure stage (8a) or from an intermediate-pressure stage (8b) is supplied, after reheating, to the low-pressure stage (8c).

## Revendications

1. Installation de turbine à gaz et de turbine à vapeur, dans laquelle une génératrice (4), une turbine (6) à gaz et une turbine (8) à vapeur sont montées sur un arbre (10) comprenant un certain nombre de segments d'arbre, la turbine (8) à vapeur comprenant un étage (8a) de haute pression et un étage (8c) de basse pression associé respectivement à un segment d'arbre, le segment d'arbre associé à l'étage (8c) de basse pression étant disposé en bout d'arbre (10) et il est prévu au moins un accouplement (28, 30) entre le segment d'arbre de l'étage (8a) de haute pression et le segment d'arbre de l'étage (8c) de basse pression, l'accouplement (28, 30, 32) ou chaque accouplement (28, 30, 32) étant un accouplement débrayable,
dans laquelle l'accouplement (28, 30, 32) débrayable ou chaque accouplement (28, 30, 32) débrayable est débrayable pendant le fonctionnement.

2. Installation (2) de turbine à gaz et de turbine à vapeur suivant la revendication 1, dans laquelle la génératrice (4) est disposée axialement entre la turbine (6) à gaz et la turbine (8) à vapeur.

3. Installation (2) de turbine à gaz et de turbine à vapeur suivant la revendication 2, dans laquelle l'étage (8a) de haute pression est relié à un étage (8b) de pression moyenne par un segment d'arbre commun.

4. Installation (2) de turbine à gaz et de turbine à vapeur suivant la revendication 3, dans laquelle l'étage (8a) de haute pression et l'étage (8b) de pression moyenne sont logés dans une carcasse commune.

5. Installation (2) de turbine à gaz et de turbine à vapeur suivant la revendication 1 ou 2, dans laquelle l'étage (8c) de basse pression est relié à un étage (8b) de pression moyenne par un segment d'arbre commun.

6. Installation (2) de turbine à gaz et de turbine à vapeur suivant la revendication 5, dans laquelle l'étage (8c) de basse pression et l'étage (8b) de pression moyenne sont logés dans une carcasse commune.

7. Installation (2) de turbine à gaz et de turbine à vapeur suivant la revendication 1 ou 2, dans laquelle il est prévu entre l'étage (8a) de haute pression et l'étage (8c) de basse pression, un étage (8b) de pression moyenne, l'étage (8b) de pression moyenne comprenant un segment d'arbre qui peut être relié aux deux segments d'arbre voisins par respectivement un accouplement (28, 30).

8. Installation (2) de turbine à gaz et de turbine à vapeur suivant l'une des revendications 1 à 7, dans laquelle il est prévu un accouplement (32) entre le segment d'arbre de l'étage (8a) de haute pression et la génératrice (4) ou entre le segment d'arbre de l'étage (8a) de haute pression et la turbine (6) à gaz.

9. Procédé pour faire fonctionner une installation (2) de turbine à gaz et de turbine à vapeur suivant l'une des revendications 1 à 8, dans un accouplement force-chaleur, dans lequel en fonction du besoin de vapeur de chauffage et de vapeur de processus et/ou du besoin d'énergie électrique, on découple de la génératrice (4) ou on accouple à la génératrice (4) un ou plusieurs étages (8a, 8b, 8c) de pression de la turbine (8) à vapeur.

10. Procédé pour faire fonctionner une installation (2) de turbine à gaz et de turbine à vapeur suivant la revendication 9, dans lequel on accouple ou on découple l'étage (8c) de basse pression.

11. Procédé pour faire fonctionner une installation (2) de turbine à gaz et de turbine à vapeur suivant la revendication 9 ou 10, dans lequel, lorsque que l'étage (8c) de basse pression est découplé de la génératrice (4), on prélève de la turbine (8) à vapeur de la vapeur d'échappement sortant de l'étage (8a) de haute pression ou d'un étage (8b) de pression moyenne et, sans passer par l'étage (8c) de basse pression, on l'envoie comme vapeur de chauffage ou de processus à une installation technique.

12. Procédé pour faire fonctionner une installation (2) de turbine à gaz et de turbine à vapeur selon la revendication 9 ou 10 dans lequel, lorsque que l'étage (8c) de basse pression est accouplé à la génératrice (4), on envoie à l'étage (8c) de basse pression, après un surchauffage intermédiaire, la vapeur d'échappement sortant de l'étage (8a) de haute pression ou d'un étage (8b) de pression moyenne.
